# EUROPÄISCHE PATENTSCHRIFT

(11) **EP 1 507 103 B1**
(45) Veröffentlichungstag und Bekanntmachung des Hinweises auf die Patenterteilung: **05.04.2006**
(21) Anmeldenummer: 03102541.4
(22) Anmeldetag: 14.08.2003
(51) Int. Cl.: F16H 61/06

(54) **Verfahren zum Schalten von zwei Kupplungen**
Method for shifting dual clutches
Procédé de passage entre deux embrayages

(43) Veröffentlichungstag der Anmeldung: 16.02.2005
(73) Patentinhaber: Getrag Ford Transmissions GmbH, 50725 Köln (DE)
(72) Erfinder: Krauss, Christian, 50737, Köln (DE); Siebigteroth, Marco, 53773, Hennef (DE)
(74) Vertreter: Drömer, Hans-Carsten

(56) Entgegenhaltungen:
- EP-A- 1 319 873
- DE-A- 19 939 334
- DE-C- 19 631 983
- US-B1- 6 319 172
- US-B1- 6 371 879
- US-B2- 6 503 172
- FÖRSTER HANS JOACHIM: "Automatische Fahrzeuggetriebe" 1991, SPRINGER , BERLIN * Seiten 206-209 * * Seite 366 - Seite 367 *

## Beschreibung

Die Erfindung betrifft ein Verfahren zum Schalten von zwei Kupplungen eines Getriebes nach dem Oberbegriff des Anspruches 1. Derartige Verfahren werden vor allem zur Steuerung von Kupplungen automatischer bzw. automatisierter Getriebe in Kraftfahrzeugen eingesetzt.

In der DE 101543722 ist ein Verfahren gemäß dem Oberbegriff des Anspruches 1 offenbart, bei dem zeitlich überschnitten eine lastannehmende, dem neuen Gang zugeordnete Kupplung geschlossen und eine lastabgebende, dem alten Gang zugeordnete Kupplung geöffnet wird, wobei die Kupplungen als schlupfgeregelte Naßkupplungen ausgebildet sind. Das Schließen der lastannehmenden Kupplung erfolgt in etwa bis auf einen der Kupplungskapazität der lastabgebenden Kupplung entsprechenden Arbeitsdruck, wobei dem Schließen der lastannehmenden Kupplung eine mit einem Befüllende abgeschlossene Befüllung mit einem Befülldruck vorausgeht. Das Verfahren sieht vor, daß bei einer manuell ausgelösten Lastschaltung (Zughochschaltung und Schubrückschaltung) die Befüllung der lastannehmenden Kupplung mit einem erhöhten, der Größenordnung der Kupplungskapazität der lastabgebenden Kupplungseinheit entsprechenden Befülldruck erfolgt, daß das Befüllende ermittelt wird und daß bei erkanntem Befüllende zeitlich überschnitten die lastabgebende Kupplung geöffnet und die Kupplungskapazität der lastannehmenden Kupplung angepaßt wird.

Nachteilig an diesem Verfahren ist, daß die lastabgebende Kupplung erst geöffnet werden kann, wenn das Befüllende festgestellt worden ist, was zu einem hohen Regelaufwand bzw. zu Regelschwierigkeiten und zu einer unnötig langen Schaltdauer führt.

Auch aus der US 4527678 ist ein Schaltverfahren gemäß dem Oberbegriff des Anspruches 1 für ein Doppelkupplungsgetriebe bekannt. Das Doppelkupplungsgetriebe weist zwei Getriebeeingangswellen auf, die jeweils über eine Kupplung mit dem Antrieb, einem Verbrennungsmotor, schaltbar sind, und die über verschiedene Gangstufen mit einer Getriebeabtriebswelle verbindbar sind. Durch eine geeignete Art der schlupfbasierten Drehmomentübergabe mit anschließender Motordrehzahl- Anpassungsphase wird die Funktion eines mechanischen Freilaufs dargestellt, indem die lastabgebende Kupplung bei Beginn der Drehmomentübergabe in den Schlupfbereich gebracht wird, erkennbar an einer erhöhten Motor- bzw. Antriebsdrehzahl.

In US 6385520 ist ein Verfahren zur drehzahl- bzw. übersetzungsabhängigen Steuerung der Drehmomentübergabe in Automatikgetrieben beschrieben, welches eine Weiterentwicklung von US 4527678 darstellt. Dabei ist insbesondere am Ende der Drehmomentübergabe wichtig, d.h. wenn die lastannehmende Kupplung das Niveau des aktuellen Motormomentes erreicht hat, das Moment der lastabgebenden Kupplung zu Null zu stellen. Gelingt dies nicht, verringert sich infolge eines Verspannungszustandes das an Abtrieb zur Verfügung stehende Moment. Ist das Getriebe in ein Kraftfahrzeug eingebaut, wird bei einer leichten Verspannung das Abtriebsmoment bzw. die Fahrzeugbeschleunigung unter das Niveau des Anschlußganges abfallen, was vom Fahrer als Komforteinbusse gewertet wird, wohingegen eine schwere Verspannung des Getriebes zu einem Blockieren der Antriebsräder führen kann, was aus Sicherheitsgründen nicht akzeptabel ist.

In DE 19522834 ist ein Verfahren zur Überschneidungsschaltung in Automatikgetrieben beschrieben, in der die Überschneidungszeit der Kupplungen von der am Getriebe anliegenden Belastung abhängig ist. Des Weiteren wird eine optimale Überschwingdifferenzdrehzahl abgelegt. Die Überschneidungszeit der Kupplungen wird hierbei nach den Erfordernissen der thermischen Kapazität der beteiligten Kupplungen und den Stellgeschwindigkeiten des elektrohydraulischen Stellsystems angepaßt und optimiert. Es zeigt damit aber auch zwei wesentliche Schwachpunkte der bisher vorgeschlagenen Drehmomentübergabeverfahren. Diese sind die erforderliche Drehzahlanhebung durch das Zulassen des Schlupfens der lastabgebenden Kupplung und die Limitierungen bei der Wahl der Zeitdauer der Drehmomentübergabe.

Da Fahrer vor allem bei Automatikgetrieben hohe Komfortansprüche erwarten und demgemäß empfindlich auf einen Drehzahlanstieg des Motors reagieren, muß der Betrag, der Anstiegsgradient und der Abfallgradient des an der lastabgebenden Kupplung verfahrensbedingt eingestellten Schlupfes sehr klein und niederdynamisch gehalten werden.

**Ein weiteres Schaltverfahren für ein Doppelkupplungsgetriebe mit mehreren über** Synchronisierungen geschalteten Gangstufen ist aus der DE 196 31 983 bekannt. Hier wird der Drehmomentnulldurchgang der lastabgebenden Kupplung durch Ausrücken einer unter Zugvorspannungen stehenden modifizierten Synchronisiermuffe detektiert. Dabei ist die Sensitivität der mit Hinterschnitt ausgelegten Synchronisierung nicht ausreichend, um z. B. bei kleineren Drehmomenten wie sie üblicherweise im Stadtverkehr auftreten ein stoßfreies Entkoppeln der lastabgebenden Kupplung zu erzielen. Da eine formschlüssige Verbindung unter leichter Drehmomentbelastung getrennt wird, wird das verbleibende Restmoment der abgebenden Kupplung schlagartig abgebaut und damit einen für den Fahrer fühlbaren Stoß bzw. hörbare akustische Wechselwirkungen erzeugen.

Das gattungsbildende Schaltverfahren der positiven Uberschneidung beschreibt Förster, Hans Joachim in "Automatische Fahrzeuggetriebe", Springer Verlag, Berlin, 1991, Seiten 206-209 und 266-367. Die lastabgebende Kupplung bleibt solange in Haftung, bis die lastannehmende Kupplung ein Verspannungsmoment erzeugt und damit ein Drehmoment überträgt, das größer ist als das Eingangsdrehmoment. Erst dann wird die lastabgebende Kupplung geöffnet, wodurch über die schlupfende lastannehmende Kupplung die Drehzahlanpassung erfolgt. Ein solches Verfahren eignet sich zwar für automatische Getriebe, bei denen ein hydrodynamischer Wandler ein Teil des Drehmomenteinbruchs durch die Verspannung abdämpft. Bei Doppelkupplungsgetrieben, insbesondere bei der Verwendung von Trockenkupplungen, führt dieses Schaltverfahren zu einer hohen Komforteinbuße und zu einer hohen thermischen Belastung der beteiligten Kupplungen.

Grundsätzlich wird bei den bisher veröffentlichten Verfahren zur Drehmomentübergabe versucht, daß die Summe der Einzelmomente, die von den Kupplungen übertragen werden, als Gesamtsumme dem aktuellen Motormoment entspricht. Dies ist erforderlich, da beide Kupplungen im Schlupf gehalten werden sollen; und dies wird auch als Basis für die Drehzahl- oder Übersetzungsregler genutzt. Dadurch ist der Umfang und die Zeitdauer zur Vorbereitung der Schaltung sehr hoch: Die lastabgebende Kupplung muß erst in Schlupf gebracht werden, dabei vergeht einige Zeit, ca. 150 bis 300ms, was vom Fahrer als Nachteil empfunden wird, da Getriebe nicht spontan schaltet. Dies gilt insbesondere für Automatikgetriebe und Doppelkupplungsgetriebe, welche mit Strategien fahren, bei denen schon ein Gang vorgewählt ist. Hier könnte die Abwicklung der Schaltung unmittelbar beginnen, wird aber durch das Einstellen des Schlupfes vorab in seinem zeitlichen Beginn verzögert.

Weiterhin ist nachteilig, das die Summe der Einzelmomente, die von den Kupplungen übertragen werden, als Gesamtsumme dem aktuellen Motormoment entspricht, da bei kleinen Fehlern im gestellten Moment die durch diese Drehmomente geführte Motordrehzahl sofort reagiert indem sie entweder bei Verringerung des Summenmomentes unter das aktuelle Motormoment ansteigt oder bei Anstieg des Summenmoments über das Niveau des Motormomentes abfällt. Während der Phase der Drehmomentübergabe wird deshalb der Verlauf der Motordrehzahl sehr leicht starken Schwankungen unterliegen, da beide Kupplungen im rutschenden Zustand betrieben werden und deshalb unmittelbar auf kleinste Änderungen reagieren.

Da der Drehzahlregler erfindungsgemäß den Anfang der Drehmomentübergabe nur an einem leichten Drehzahleinbruch erkennen kann, der auch einen Einbruch im Abtriebsmoment bewirkt, ist es einerseits in der Abstimmung aufwendig diesen Übergang stabil darzustellen, und anderseits ist die Möglichkeit leicht gegeben, daß der Fahrer diesen Einbruch im Drehmoment und damit in der Fahrzeugbeschleunigung bemerkt. Weiterhin muß dieser Regler auf unterschiedliche Reibungsverhältnisse der Kupplung und unterschiedliches Reaktionsverhalten des hydraulischen Systems reagieren bzw. abgestimmt werden, wobei viele verschiedene Parameter wie Temperatur oder Last (hohes oder niedriges Drehmoment, Gang, Betriebszustand Zug oder Schub) berücksichtigt werden müssen. Die durchzuführende Abstimmung ist daher sehr zeitaufwendig und die im Getriebesteuergerät dafür benötigten Ressourcen sind sehr hoch. Verstärkt wird dieses Problem, wenn die einzustellenden Drehzahldifferenzen sehr gering sind. Die Drehzahlregelung muß dann von sehr hoher Qualität und Schnelligkeit sein, was im gesamten Getriebeumfeld nur sehr aufwendig zu realisieren ist.

Weiterhin reagieren die Drehzahlregler auf die unterschiedlichen Eigenfrequenzen des Antriebsstranges, weshalb in der Abstimmung der Drehzahl-, Schlupf- oder Übersetzungsregler darauf zu achten ist, das die entsprechenden Frequenzen entsprechend gedämpft sind. Dieses wiederum schränkt aber die Reglerdynamik ein, weshalb eine Drehmomentübergabe nicht beliebig kurz gemacht werden kann. Die zur Steuerung verwendeten Drehzahlregler weisen prinzipbedingt eine Empfindlichkeit gegenüber Eigenschwingungen im Antriebsstrang auf. Sind z. B. durch einen Vorgang im Antriebsstrang bereits Schwingungen vorhanden werden diese von Drehzahlreglern entweder nicht bedämpft oder im ungünstigsten Fall sogar verstärkt. Eine optimale Abstimmung ist daher nur schwierig machbar und führt zu minderdynamischen Abstimmungen, welche wiederum die Schaltzeit verlängern.

Das gleiche gilt für geeignete Übergänge bei der Drehmomentübergabe. Um den Komfort für den Fahrer zu steigern, ist es offensichtlich, daß Sprungstellen und Knicke im Schaltvorgang zu vermeiden sind, da diese zu Stößen und Rucken führen. Eine Begrenzung in der Dynamik der zugrundegelegten Regelung ist hier nachteilig, da vorgegebenen geeigneten Drehmomentverläufen nur unzulänglich gefolgt werden kann, und wenn die Regler nicht folgen können oder beim Versuch diesen Mangel durch entsprechende Anhebung der Verstärkungsfaktoren zu kompensieren, das System zum Aufschwingen neigt.

Bei längeren Drehmomentübergaben hingegen steigt die Wahrscheinlichkeit, daß der Drehzahlregler eine entsprechende Frequenz der Antriebsstranges trifft, und dann instabil wird, also aufschwingt. Dies ist in der längeren Zeitdauer des ablaufenden Vorganges begründet, infolgedessen die Anzahl der auftretenden Störungen ansteigt so daß wiederum die Wahrscheinlichkeit des Auftretens einer Instabilität zunimmt.

Die grundsätzliche Reglerdynamik des Drehzahlreglers begrenzt die Geschwindigkeit des Drehmomentübergangs von der lastabgebenden Kupplung an die lastannehmende Kupplung, da die Aufbereitung der Drehzahlsignale und Drehzahlgradienten nur zeitverzögert erfolgt und auch Totzeitanteile einschließt, die für alle bekannten Regelungskonzepte nicht sinnvoll gelöst werden können. Eine sehr schnelle Drehmomentübergabe ist damit nicht möglich. Dies führt zu einer Verlängerung der Schaltzeit, was vom Fahrer unerwünscht ist.

Weiterhin muß bei der Abstimmung der Drehzahlregler die Viskosität des Getriebeöls, die mit der Temperatur abnimmt, berücksichtigt werden, da dies die Dynamik der Regelstrecke verändert. Auch sind in unterschiedlichen Gänge unterschiedliche Eigenfrequenzen des Antriebsstrangs vorhanden, z. B. niedrigen Gangstufen niedrige Eigenfrequenzen um 2 Hz und bei hohen Gangstufen höhere Eigenfrequenzen um 8―10 Hz. Dies erzwingt die Abstimmung von Temperatur, Gangstufe und Schaltungstyp mit entsprechend hohem Aufwand an Sensorik, Regelungsverfahren und Steuerungskapazität.

Ein Ende des Drehmomentübergabevorgangs kann in der Regel nur an einem Drehzahleinbruch erkannt werden. Dies hat den Nachteil einer Weiteren vom Fahrer möglicherweise als unangenehm empfundene Veränderung der Beschleunigung, z. B. einen Ruck. Des Weiteren kann der genaue Zeitpunkt des Endes der Drehmomentübergabe nur schwer festgestellt werden, da bei der Abstimmung zwischen dem Erkennen der Beendigung und dem Auftreten von leichten Schwingungen im Antriebsstrang, die nichts mit dem Abschlußs der Drehmomentübergabe zu tun haben, ein geeigneter Kompromiß gefunden werden muß. Der zeitliche genaue Ablauf des Schaltungsablaufes wird hierdurch u. U. verlängert.

Da die Verfahren in der Regel auf eine Enderkennung durch Drehzahlabfall angewiesen sind, ist durch den vorgesehenen Drehzahlverlauf auch der Drehmomentverlauf festgelegt. Da hiermit der Übergang in die anschließende Drehzahlanpassungsphase beeinflußt wird, in der die Motordrehzahl an die neue Getriebeübersetzung angepaßt wird, können sowohl der weitere Verlauf der Drehzahl als auch der anschließende Drehmomentverlauf nicht frei gewählt werden.

Aufgabe der Erfindung ist es daher, ein Verfahren zur Schaltung von zwei Kupplungen so zu verbessern, daß die bekannten Nachteile aus dem Stand der Technik zumindest teilweise überwunden werden, insbesondere daß der Schaltkomfort erhöht wird und Schaltdauer und Regelaufwand verringert werden.

Gelöst wird diese Aufgabe mit den Merkmalen des Anspruches 1.

Indem während der Drehmomentübergabe die lastannehmende Kupplung Drehmomentkapazität im Schlupfbereich aufbaut und die lastabgebende Kupplung Drehmomentkapazität abbaut, wobei in der Anfangsphase der Drehmomentübergabe die lastabgebende Kupplung eine höhere Drehmomentkapazität aufweist als zur Aufrechterhaltung ihres Haftzustandes notwendig ist, kann zumindest die erste Phase der Drehmomentübergabe durch eine einfache Steuerung der beiden Kupplungen erfolgen. Dadurch ist keine aufwendige Regelung der Kupplungskapazitäten und aufwendige Erfassung von Drehzahlschwanken etc. wie aus den Verfahren des Standes der Technik bekannt notwendig. Die lastabgebende Kupplung bleibt, obwohl deren Drehmomentkapazität reduziert wird, drehfest mit der Antriebswelle des Motors verbunden, während die lastannehmende Kupplung unter Schlupf ihre Drehmomentkapazität steigert.

Da die lastabgebende Kupplung mit absichtlich über einen weiten Bereich der Drehmomentübergabe überkapazitiv gehalten wird, bestimmt ausschließlich die schlupfende, lastannehmende Kupplung den Drehmomentübergang und damit den Verlauf des am Abtrieb zur Verfügung stehenden Drehmomentes und damit der Fahrzeugbeschleunigung. Vorteilhaft ist dabei, das weder die Motordrehzahl durchgehen oder abfallen kann und das der Verlauf des Abtriebsmoments beziehungsweise der Beschleunigungsverlauf des Fahrzeuges ausschließlich durch die drehmomentübemehmende Kupplung bestimmt wird. Es kommt dabei nicht zu Interferenzen zwischen den Steuerkreisen der beiden Kupplungen die sich auf die Stabilität der Motordrehzahl oder den Verlauf der Fahrzeugbeschleunigung auswirken.

Auch wird keine Vorbereitungszeit für eine Schaltung benötigt und es kommt nicht zu ungewollten Drehzahlanstiegen bei der Vorbereitung der Drehmomentübergabe. Sobald die lastannehmende Kupplung zur Drehmomentübemahme fähig ist, kann der Schaltvorgang begonnen werden. Da der Fahrer dann unmittelbar eine Änderung der Fahrzeugbeschleunigung spüren wird, werden die mit diesem Verfahren durchgeführten Schaltungen als spontan und schnell ansprechend empfunden. Weiterhin ist das Verfahren unempfindlich gegen Drehmomentschwankungen und/oder Ungenauigkeiten der Drehmomentbestimmungen des Motors, da diese nicht direkt zur Steuerung der Drehmomentübergabe dienen, sondern die Drehmomentübergabe nur durch den Anstieg des Drehmomentanteils der lastübemehmenden Kupplung bestimmt ist. Auch Schwankungen der Kupplungseigenschaften und ggf. des Schmiermittels infolge von Temperatur, Alterung und Verschleiß werden so problemlos ausgeglichen.

Der Übergang der lastabgebenden Kupplung in den Schlupfbereich kann jederzeit während der Drehmomentübergabe erfolgen, solange keine Blockade des Getriebes bzw. der Abtriebswelle erfolgt. D.h., es spielt keine Rolle, wieviel Anteil vom Antriebsmoment die lastannehmende Kupplung trägt, ob 10%, 50% oder auch 90%, der Übergang hängt allein von den weiteren Anforderungen der Steuerung an die Schlupfregelung der beiden Kupplungen ab.

Im ersten Bereich der Drehmomentübergabe, wo die lastabgebende Kupplung noch nicht schlupft, wird dazu diese Kupplung gezielt mit Überkapazität gefahren. Das heißt die lastabgebende Kupplung wird sicher geschlossen gehalten. Für die erste Phase der Drehmomentübergabe ergibt sich damit eine Summe der übertragbaren Momente der Kupplungen, die größer ist als das aktuelle vom Motor bzw. Antrieb ins System eingespeiste Drehmoment. Erst in der letzte Phase des Überganges in den Schlupfbereich der lastabgebenden Kupplung wird die Summe der von den Kupplungen übertragbaren Momente auf oder leicht unter das Niveau des Motordrehmoments abgesenkt und damit der Schlupf der lastabgebenden Kupplung bewirkt.

Das Verfahren kann bevorzugt für Zughoch- und Schubrückschaltungen eingesetzt werden, aber auch beliebig, d. h. unabhängig davon ob der Antrieb antreibt oder bremst, und ob die Drehzahl der lastannehmenden Kupplung höher oder niedriger ist als die der lastabgebenden Kupplung.

Bei dieser Betrachtung spielt es keine Rolle, ob die Kupplungen mit gleichen oder unterschiedlichen Antriebsdrehzahlen laufen. Gleiche Antriebsdrehzahlen liegen z. B. bei einem Doppelkupplungsgetriebe vor, das eine Antriebswelle und zwei konzentrischen Eingangswellen und zwei darauf angeordneten Kupplungen aufweist. Unterschiedliche Eingangsdrehzahlen liegen vor z. B. bei zwei Kupplungen und/oder Bremsbändern von verschiedenen Radsätzen eines Getriebeautomats. Im letzteren Fall ist bei der Berechung der Drehmomente noch der Effekt aus den unterschiedlichen Antriebsdrehzahlen zu berücksichtigen, der aber, wenn auf eine einheitliche Drehzahl normiert wird, zum gleichen Verlauf der Drehmomentkapazitäten führt wie im vorherigen Absatz beschrieben.

Vorteilhaft geht die lastabgebende Kupplung in den Schlupfbereich über, wenn die schlupfende lastannehmende Kupplung einen beträchtlichen Teil des Antriebsmomentes überträgt. Bevorzugt ist das Schlupfen der lastabgebenden Kupplung auf einen im Ablauf der Drehmomentübergabe sehr späten Zeitpunkt beschränkt, bei welchem die lastabgebende Kupplung bereits nur noch sehr wenig Drehmoment überträgt, d.h. mehr als 50% des Antriebsmomentes. Auftretende Fehler in der Drehmomentregelung können sich damit nur noch sehr gering auswirken, da die lastannehmende Kupplung bereits den Hauptteil des Drehmomentes übemommen hat. Die Wahrscheinlichkeit des Auftretens von Drehzahlüberschwingem und Störungen der Fahrzeugbeschleunigung ist damit sehr stark eingeschränkt. Dies erhöht den Komfort und erlaubt eine einfachere und damit sicherere Ausführung der Regelungstechnik und der Regelungselemente wie Getriebesteuerung, elektrische und hydraulische Stellglieder usw.

Auch Ungenauigkeiten in der Berechung des Motormomentes haben keine signifikante Auswirkung auf das Verfahren. Bei den bisher bekannten Verfahren führt das falsche Motormoment leicht zu fehlerhaften Ansteuerungen des Drehzahlreglers, wodurch Drehzahlüberschwinger durch spontanes Losreißen der Kupplung mit entsprechend hohen Drehzahlgradienten bei vollem aktuellen Motormoment möglich sind, die aber von einem Fahrer als störend empfunden werden. Dieses Drehzahlüberschwingen kann nicht auftreten, da die lastabgebende Kupplung sich im Haftreibungsbereich befindet und damit die Drehzahl der Eingangswelle der lastabgebenden Kupplung unverändert der Motordrehzahl entspricht für die größte Zeit der Drehmomentübergabe.

In einer weiteren Ausführung der Erfindung ist die Zeitdauer der Drehmomentübergabe beliebig einstellbar. Da das Verfahren im wesentlichen gesteuert ist, muß nicht auf aufwendige Regelungskreisläufe Rücksicht genommen werden, sondern die Steuerung läuft entsprechend langsam oder schneller, ohne daß das die Drehmomentübergabe an sich unkontrollierbar wäre. Damit kann dem Schaltverhalten bzw. den Komfortwünschen des Fahrers und/oder unterschiedlichen Betriebszuständen Rechnung getragen werden. Wenn der Fahrer bewußt sportlich bzw. komfortabel fahren möchte, wird die Zeitdauer entsprechend kürzer bzw. länger gewählt. Bei geringer Drehmomentkapazität und/oder geringen Antriebsdrehzahlen kann diese Zeitdauer ebenfalls kürzer sein, während bei großen Antriebsleistungen und/oder hohen Antriebsdrehzahlen die Zeitdauer erhöht sein kann, um eine einwandfreie Steuerung und Regelung sicherzustellen. Dies gilt ebenso für Schaltungen in niedrigen bzw. hohen Gangstufen des Getriebes, auch hier kann entsprechend den Anforderungen die Zeitdauer unterschiedlich angepaßt sein.

Weiterhin sind die Zeitpunkte, an denen die Drehmomentkapazitätsreduzierung der lastabgebenden Kupplung und die Drehmomentkapazitätserhöhung der lastannehmenden Kupplung beginnen, beliebig einstellbar, wobei die Zeitpunkte gleichzeitig sein können oder versetzt. Versetzt bedeutet, daß entweder die lastabgebende zuerst die Drehmomentkapazität reduziert, allerdings nicht unter die Haftgrenze, und dann die lastannehmende Kupplung Drehmomentkapazität aufbaut. Oder umgekehrt, zuerst beginnt die lastannehmende Kupplung mit der Erhöhung der Drehmomentkapazität und dann erst die lastabgebende Kupplung mit der Reduzierung. Damit können Schaltgeschwindigkeit und/oder Schaltkomfort erhöht werden, z. B. wenn zwei Kupplungen unterschiedlichen Types verwendet werden, oder wenn eine offene oder geschlossene Kupplung Anlaufzeit benötigt.

Durch diese Maßnahme treten auch nicht Probleme auf, wenn beim Einleitung von Schaltungen in Getrieben z. B. das Druckniveau des versorgenden Hydrauliksystems angepaßt werden muß um die Schaltung durchführen zu können. Die Stellglieder können ihre spezifischen Eigenschaften im Laufe des Betriebes ändern, was aber vorerst keinen Einfluß auf die Schaltung hat. Die zur Regelung verwendeten Funktionen können im Verlauf der Schaltung selbst Stellgrößenabweichungen ausregeln und auch die Verschiebungen der Arbeitspunkte kompensieren, was nach dem bisherigen Stand der Technik vor dem Schaltvorgang erfolgen muß.

Dies gilt in gleicher Art auch für Doppelkupplungsgetriebe mit trockenen Reibschreiben oder teilzugkraftunterstützende Getriebekonzepte. Hier müssen nach dem Stand der Technik oftmals ebenfalls Stellglieder zum Beispiel mittels Schnellwegüberbrückungen in entsprechende Arbeitspunkte gestellt werden. Da diese Stellvorgänge nicht rückwirkungsfrei darstellbar sind, wird die beginnende Schlupfregelungsphase der lastabgebenden Kupplung gestört. All dies tritt bei dem erfinderischen Verfahren nicht auf, da diese Stellvorgänge Teil der Drehmomentübergabe selbst sind. Damit ist der gesamte Schaltvorgang schneller und sicherer durchführbar.

Eine weitere vorteilhafte Ausführung sieht vor, daß die Reduzierung der Drehmomentkapazität der lastabgebenden Kupplung während der Drehmomentübergabe nicht kontinuierlich erfolgt. Insbesondere kann bei der lastabgebenden Kupplung gegen Ende der Drehmomentübergabe schneller abgebaut wird als zu Beginn der Drehmomentübergabe. Dies kann genutzt werden, um zu Beginn der Drehmomentübergabe langsam die lastabgebende Kupplung auf den Punkt einzuregeln, ab dem die Drehmomentkapazität langsam zu sinken beginnt, und dann die Drehmomentkapazität sehr stark absenkt auf einen Wert, der sich gerade noch oberhalb der aktuellen Haftreibungsgrenze der lastabgebenden Kupplung befindet. Damit kann mit einfachen Regelungsverfahren die lastabgebende Kupplung eingeregelt werden.

Vorteilhaft wird zum Ende der Drehmomentübergabe mittels der lastabgebenden Kupplung ein Schlupfregler dargestellt, der- einen selbsttätigen- Abschluß der Drehmomentübergabe bewirkt. Alternativ kann zum Ende der Drehmomentübergabe mittels der lastannehmende Kupplung ein Schlupfregler dargestellt werden, der einen selbsttätigen Abschluß der Drehmomentübergabe bewirkt. Für eine sehr kurze Zeitdauer werden dann beide Kupplungen in den Schlupfzustand versetzt, wodurch das von den Kupplungen übertragene Moment eindeutig bestimmt ist, indem mittels des Schlupfreglers die übertragenen Momente der beiden schlupfenden Kupplungen bestimmt wird, und das damit aus dem Summenmoment der Kupplungen das Antriebsmoment adaptiert wird. Vorteilhaft werden in diesem Bereich die Drehzahlen von Motor und Getriebe näherungsweise konstant gehalten, so daß keine Lastanteile aus der Beschleunigung oder Verzögerung von trägheitsbehafteten Drehmassen zu berücksichtigen sind. Eine leichte Drehzahländerung kann hier akzeptiert werden, da sie nur von kurzer Dauer ist und/oder bereits auf die neue Eingangsdrehzahl hinführt.

Bevorzugt wird das Ende der Drehmomentübergabe durch Überwachung eines eingestellten Kupplungsdruckes oder einer eingestellten Kupplungsposition bestimmt. Diese Daten sind sehr einfach und robust zu ermitteln, so daß die Auslegung von Sensoren wenig Aufwand erfordert und die Weiterverarbeitung der gewonnenen Signale mit einfachen regeltechnischen Verfahren erfolgen kann.

Vorteilhaft erfolgt die Anpassung der Antriebsdrehzahl an die Drehzahl der lastannehmenden Kupplung nach dem Übergang der lastabgebenden Kupplung in den Schlupfbereich. Bei jedem Schaltvorgang muß auch die Drehzahl der Antriebswelle von der Drehzahl der lastabgebenden Kupplung auf die Drehzahl der lastannehmenden Kupplung gebracht werden, wobei dies sowohl eine Drehzahlerhöhung als auch eine Drehzahlreduzierung sein kann, im Zug- oder im Schubbetrieb. Normalerweise erfolgt die Drehzahlanpassung erst nach vollständiger Drehmomentübergabe auf die lastannehmende Kupplung. Es ist aufgrund des späten Zeitpunktes des Schlupfens der lastabgebenden Kupplung bei diesem Verfahren möglich, direkt die Antriebsdrehzahl noch während der Drehmomentübergabe auf die Drehzahl der lastannehmenden Kupplung hin zu verändern. Sobald die lastabgebende Kupplung schlupft, wird die Drehmomentkapazität der lastannehmenden Kupplung soweit erhöht, daß die Drehmomentkapazität von lastabgebender und lastannehmender Kupplung höher sind als das aktuelle Antriebsmoment. Vorteilhaft wird damit die Schaltdauer, insbesondere aufgrund der verkürzten Drehzahlanpassungsphase, insgesamt verringert.

Wie üblich kann die Anpassung der Antriebsdrehzahl an die Drehzahl der lastannehmenden Kupplung nach vollständiger Öffnung der lastabgebenden Kupplung erfolgen. Dann wird die Drehmomentkapazität der lastannehmenden Kupplung so eingestellt, daß der Drehzahlanpassung kontinuierlich erfolgt.

Vorteilhaft ist die Zeitdauer der Anpassung der Antriebsdrehzahl beliebig einstellbar. Bei der Anpassung der Antriebsdrehzahl entsteht an der Abtriebswelle ein Schwung- bzw. Bremseffekt, je nach Drehzahlverhältnis und ob Zug- oder Schubbetrieb vorliegt. Dieser Effekt ist jedoch nach Möglichkeit zu vermeiden oder zumindest so gering wie möglich zu halten, da der Fahrer dies als unerwünschtes Rucken, d.h. ein kurzfristiges Beschleunigen bzw. Bremsen, verspürt. Indem die Zeitdauer der Anpassung variabel wird, kann dem Schaltverhalten bzw. den Komfortwünschen des Fahrers und/oder unterschiedlichen Betriebszuständen Rechnung getragen werden. Wenn der Fahrer bewußt sportlich bzw. komfortabel fahren möchte, wird die Zeitdauer entsprechend kürzer bzw. länger gewählt. Bei geringer Drehmomentkapazität und/oder geringen Antriebsdrehzahlen kann diese Zeitdauer ebenfalls kürzer sein, während bei großen Antriebsleistungen und/oder hohen Antriebsdrehzahlen die Zeitdauer erhöht sein kann, um eine möglichst ruckfreie Drehzahlanpassung sicherzustellen. Dies gilt ebenso für Schaltungen in niedrigen bzw. hohen Gangstufen des Getriebes, auch hier kann entsprechend den Anforderungen die Zeitdauer unterschiedlich angepaßt sein.

Bevorzugt wird während des Schaltvorganges das Antriebsmoment kurzzeitig erhöht und/oder verringert. Damit kann der Effekt des Drehmomentabfalls bzw. - anstieges aufgrund der Drehmomentanpassung mit anschließendem Drehmomentanstieg bzw. ―abfall aufgrund der Drehzahlanpassung, der zu dem oben beschriebenen Rucken führt, ausgeglichen werden, indem die Antriebsleistung bewußt kurzfristig erhöht und/oder auch erniedrigt wird. Damit wird an der Abtriebswelle der Abtriebsmomentverlauf während des gesamten Schaltvorganges weniger unstetig bzw. bestenfalls kontinuierlich. Das zusätzliche Antriebs- bzw. Bremsmoment kann dabei vom Motor selbst erzeugt werden, und/oder von zusätzlich vorhandenen, mit der Antriebswelle verbundenen Aggregate wie z. B. Elektromotoren, Hydraulikpumpen, Starter-Generatoren etc. bereitgestellt werden.

Vorteilhaft wird eine mit der lastabgebenden Kupplung verbundene Gangstufe unmittelbar nach Beendigung der Drehmomentübergabe ausgerückt, damit im Falle eines Fehlers bei der Drehmomentübergabe ein unerwünschter Verspannungszustand vermieden wird.

Das erfinderischen Verfahrens kann Verwendung finden bei einem Doppelkupplungsgetriebe mit zwei Getriebeeingangswellen und einer Ausgangswelle, wobei jeder Eingangswelle eine Kupplung zugeordnet ist, bei einem Getriebeautomat und bei allen anderen bekannten Getrieben, bei denen ein Drehmoment von einer Kupplung auf eine andere Kupplung übergeben werden soll, wie bereits teilweise in der DE 10153722 beschrieben.

Wenn in dieser Anmeldung von Kupplungen die Rede ist, sind alle mechanischen Elemente gemeint, die eine schaltbare reib- und/oder kraftschlüssige Verbindung zwischen Wellen herstellen können. Dies können trockene Reibkupplungen, nasse Reibkupplungen wie Lamellenkupplungen, und/oder Bremsbänder eines Getriebeautomats sein. Besonders vorteilhaft können mit diesem Verfahren auch zwei Kupplungen unterschiedlicher Bauart gesteuert werden, z. B. ein Bremsband und eine nasse - Lamellenkupplung eines Getriebeautomats. Der Aufbau der Drehmomentkapazität, d. h. die Betätigung der Kupplung, kann dabei durch hydraulische, mechanische, elektrische, pneumatische oder durch andere geeignete Stellglieder erfolgen. Bauart bedingt ist weiterhin selbstverständlich, daß jede Kupplung entweder lastabgebende oder lastannehmende Kupplung sein kann, je nachdem welche Gangstufe gerade übertragen wird und in welche Gangstufe geschaltet werden soll.

Weitere vorteilhafte Ausgestaltungen der Erfindungen sind den Zeichnungen zu entnehmen. Es zeigen:
- Fig.1a-1c: einen Verlauf der Drehmomentübergabe mit Schlupfregelung der lastannehmenden Kupplung in der Endphase;
- Fig. 2a-2c: einen Verlauf der Drehmomentübergabe mit Schlupfregelung der lastabgebenden Kupplung in der Endphase;
- Fig. 3a-3c: den Verlauf der Drehmomentübergabe mit schleifenden Kapazitätsabbau der lastabgebenden Kupplung in der Endphase;
- Fig.4a-4c: einen Verlauf der Drehmomentübergabe mit starkem Kapazitätsabbau der lastabgebenden Kupplung in der Endphase;
- Fig. 5a-5c: einen Verlauf der Drehmomentübergabe mit überschneidender Drehzahlanpassungsphase; und
- Fig. 6a-6c: einen Verlauf mit nichtlinearer Drehmomentübergabe.

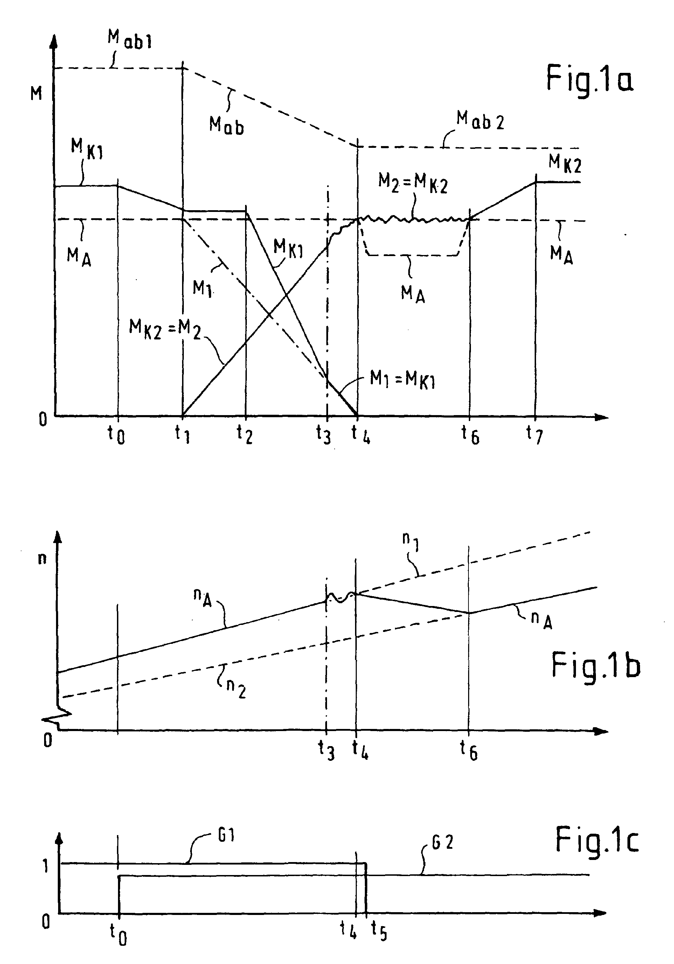

In Figur 1a bis 1c ist ein Verlauf der Drehmomentübergabe mit Schlupfregelung der lastannehmenden Kupplung für eine Zughochschaltung dargestellt, wobei Fig. 1a den Verlauf der Drehmomente, Fig. 1b den Verlauf der Drehzahlen, und Fig. 1c den Schaltzustand der Gänge, die mit lastabgebender und lastannehmender Kupplung verbunden sind, zeigt.

Zum Zeitpunkt t0 beginnt die Schaltung, indem die Drehmomentkapazität MK1 der lastabgebendenden Kupplung K1 auf einen Betrag abgesenkt wird, der geringfügig über dem aktuellen Antriebsmoment MA liegt, so daß die lastabgebende Kupplung K1 sicher im Haftreibungsbereich bleibt; und Gang G2 der lastannehmenden Kupplung K2 eingerückt wird. Dieser Vorgang kann auch bereits mit einigem zeitlichen Vorlauf vor der eigentlichen Drehmomentübergabe erfolgen, d.h. wenn aufgrund der aktuellen Fahrsituation ersichtlich ist, daß ein Schaltvorgang bevorsteht. Am Getriebeausgang steht das Abtriebsmoment Mab1 zum Antrieb eines Fahrzeuges zur Verfügung, wobei sich Mab1 aus dem Antriebsmoment MA und dem Übersetzungsverhältnis der aktuell eingelegten Gangstufe G1 des Getriebes ergibt.

Bei t1 beginnt die lastannehmende Kupplung K2 Drehmomentkapazität MK2 aufzubauen, wobei MK2 dem aktuellen, von der Kupplung K2 übertragenem Moment M2 entspricht, da bei der Zughochschaltung aufgrund der Drehzahl- und Lastverhältnisse der zwischen den beiden Kupplungen K1 und K2 die lastabgebende Kupplung K1 die Funktion eines Freilaufes einnimmt. Das aktuelle übertragene Drehmoment M1 der lastabgebenden Kupplung bestimmt sich dann aus dem Antriebsmoment MA minus dem aktuell übertragenen Drehmoment M2. Durch das steigende Drehmoment M2 der lastannehmenden Kupplung sinkt das resultierende Abtriebsmoment Mab, das am Getriebeausgang zum Antrieb eines Fahrzeuges zur Verfügung steht, entsprechend dem Anstieg von M2 ab, wobei der Verlauf des Abtriebsmomentes nicht gegen Null gerichtet ist, sondern etwa auf den Wert des Abtriebsmomentes Mab2, der sich aufgrund der neu eingelegten Gangstufe G2, vollständig geöffneter lastabgebender Kupplung K1 und vollständig geschlossener lastannehmender Kupplung K2 ergibt.

Ab dem Zeitpunkt t2 wird die Drehmomentkapazität MK1 der lastabgebenden Kupplung K1 kontinuierlich abgesenkt, wobei die Kupplung dabei im Haftreibungsbereich verbleibt, d. h. die Drehmomentkapazität MK1 ist weiterhin größer als ihr aktuell übertragenes Drehmoment M1. Bei t3 entspricht die Drehmomentkapazität MK1 dem aktuellen Drehmoment M1, ab da geht die lastabgebende Kupplung in den Schlupfbereich über. Ab t3 ist die Summe der Drehmomentkapazitäten MK1 und MK2 der beiden Kupplungen kurzfristig geringer als das aktuelle Antriebsmoment MA, was zur Folge hat, daß die Antriebsdrehzahl nA kurz ansteigt. Bei Erkennen des Drehzahlanstieges schaltet die lastannehmende Kupplung K2 von der reinen Steuerung auf eine Schlupfregelung über und es wird eine entsprechende Drehmomentkapazität MK2 eingestellt, wobei die Antriebsdrehzahl nA als Regelgröße dient. Gleichzeitig wird die Drehmomentkapazität MK1 mit etwas verringerter Geschwindigkeit weiter bis auf 0 zum Zeitpunkt t4 reduziert. Sobald die lastabgebende Kupplung K1 kein Drehmoment mehr überträgt, wird möglichst zeitnah zu t4 der dazugehörige Gang G1 bei t 5 ausgerückt, s. Fig. 1c.

Erst wenn die lastabgebende Kupplung K1 bei t3 in den Schlupfbereich übergeht, wird die lastannehmende Kupplung K2 schlupfgeregelt, wobei als Regelungsgröße vor allem die Drehzahldifferenz von Antriebsdrehzahl nA und die Drehzahl n1 der lastabgebenden Kupplung K1 dient. Sobald bei t4 die lastabgebende Kupplung K1 kein Drehmoment M1 mehr überträgt, beginnt der Bereich der Drehzahlanpassung durch Regelung der lastannehmenden Kupplung K2, wobei die Antriebsdrehzahl nA auf das Niveau der Drehzahl n2 der lastannehmenden Kupplung K2 bis zum Zeitpunkt t6 abgesenkt wird. Damit beim Abtriebsmoment Mab2 keine Überhöhung zwischen t4 und t6 aufgrund der dynamischen Effekte auftritt, wird durch einen Eingriff in das Motormanagement das Antriebsmomentes MA zwischen t4 und t6 kurzfristig abgesenkt. Sobald Drehzahlgleichheit von nA und n2 bei t6 erreicht ist, wird die Drehmomentkapazität MK2 der Kupplung K2 auf einen Wert entsprechend des notwendigen Sicherheitsabstandes oberhalb des aktuellen Antriebsmoments MA erhöht, bei t7 ist der gesamte Schaltvorgang abgeschlossen.

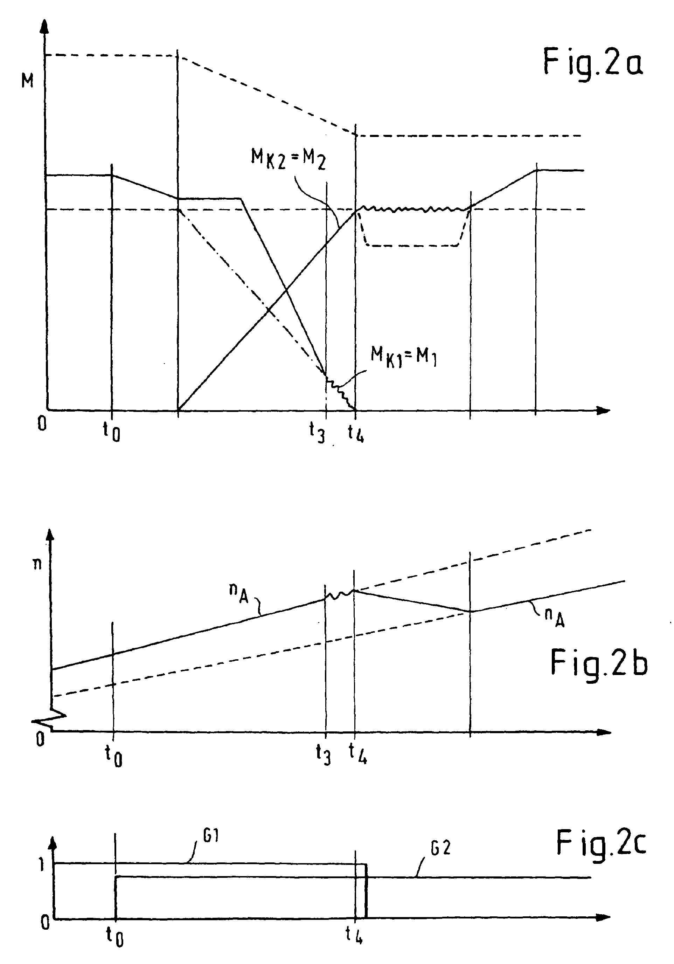

Fig. 2a bis 2c entsprechen im wesentlichen Fig. 1a bis 1c. Der einzige Unterschied besteht darin, daß ab t3 bei der lastabgebenden Kupplung K1 die Drehmomentkapazität MK1 für den Übergang zur vollständig geöffneten Kupplung K1 zwischen t3 und t4 schlupfgeregelt ist, während die lastannehmende Kupplung K2 bis zum Zeitpunkt t4 weiterhin nur gesteuert die Drehmomentkapazität MK2, damit das übertragene Drehmoment M2erhöht und erst ab t4 in den schlupfgeregelten Zustand übergeht. Diese Verfahren hat den Vorteil, daß der Übergang in den schlupfgeregelten Bereich für die lastabgebende Kupplung K1 sehr schnell erfolgen kann, da das aktuelle übertragene Moment M1 nur noch gering ist, also einfache Schlupfregler nur notwendig sind. Dagegen kann sich der Schlupfregler der lastannehmenden Kupplung K2 langsam, d. h. vom Zeitpunkt t3 bis t4, auf die Übemahme der Regelungsfunktion ab t4 vorbereiten. Insgesamt erlaubt dieses Vorgehen, relativ einfache Schlupfregler für beide Kupplungen einzubauen.

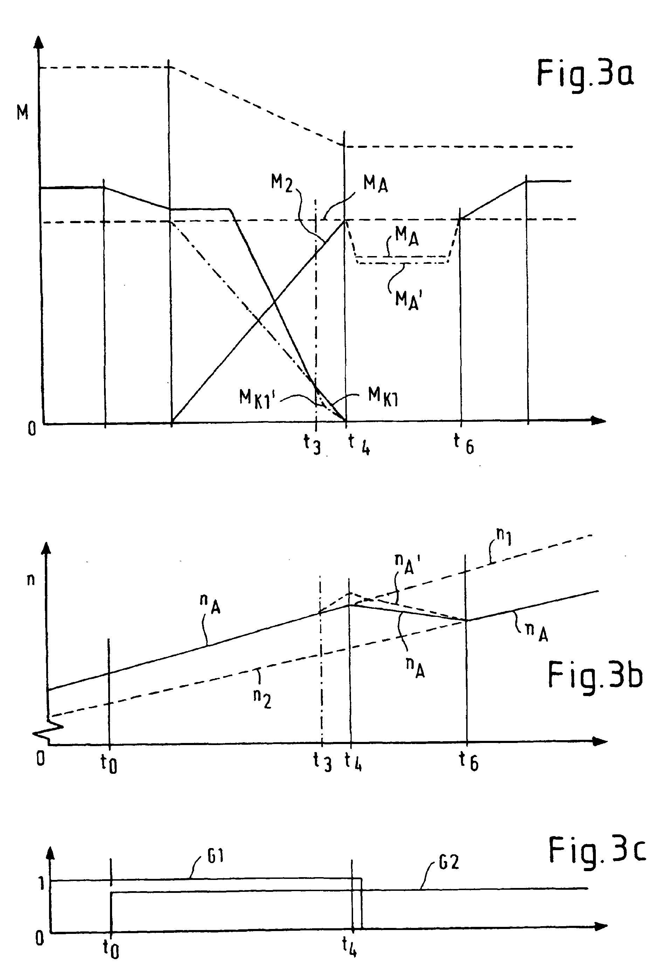

Die Fig. 3a bis 3c entsprechen ebenfalls im wesentlichen den Fig. 1a bis 1c. Hier sind jedoch sowohl lastabgebende als auch lastannehmende Kupplung ab t3 nur gesteuert, d. h. beide Kupplungen schleifen und es ergibt sich eine Antriebsdrehzahl nA zwischen t3 und t4, die nur vom aktuellen Kupplungszustand und von der entsprechenden Steuerung abhängig ist. Je nach Einstellung bleibt nA auf dem Niveau der Kupplungsdrehzahl n1, oder nA' erhöht sich (gestrichelte Darstellung). Dies ist der Fall, wenn die Drehmomentkapazität MK1' unter den benötigten Wert fällt, der notwendig ist, um mit der Drehmomentkapazität der lastabgebenden Kupplung K2 das Antriebsmoment MA zu halten. In diesem Falle muß die Drehzahl nA' in der anschließenden Drehzahlanpassungsphase zwischen t4 und t6 etwas weiter von der dann schlupfgeregelten lastannehmenden Kupplung K2 heruntergezogen werden auf n2, wobei das Motormanagement bei Bedarf das Antriebsmoment MA' etwas weiter absenkt. Vorteil dieser Ausführung des Verfahrens ist wie in der vorherigen Ausführung, daß der Schlupfregler der lastannehmenden Kupplung K2 zwischen t3 und t4 etwas Zeit gewinnt, um sich einzuregeln, während die lastabgebende Kupplung K1 bei diesem Vorgang nicht schlupfgeregelt ist, so daß die Schlupfregler für beide Kupplungen insgesamt einfacher ausgeführt sein können.

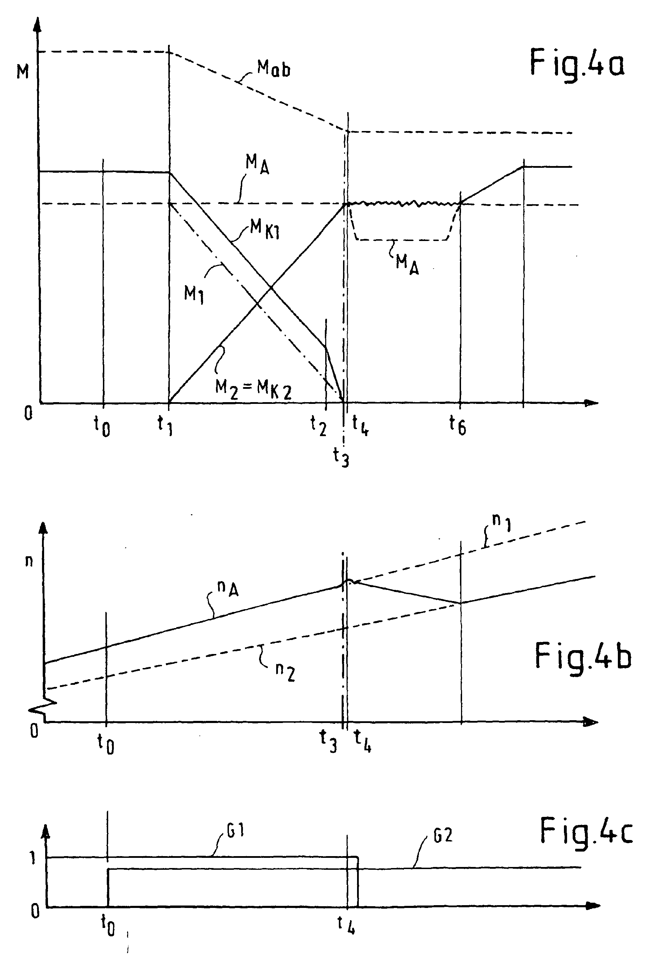

Eine weitere Variante des Steuerverfahrens ähnlich dem in Fig. 1a bis 1c ist in Fig. 4a bis 4c dargestellt. Hier ist gezeigt, wie ab t1 die Drehmomentkapazität MK2, die dem aktuellen übertragenen Moment M2 entspricht, der schlupfenden lastannehmenden Kupplung K2 erhöht wird und die Drehmomentkapazität der sich im Haftreibungsbereich befindlichen, lastabgebenden Kupplung K1 um den entsprechenden Betrag reduziert wird. Zum Zeitpunkt t3 wird die Drehmomentkapazität MK1 der lastabgebenden Kupplung schneller als vorher reduziert und zwar derart, daß etwa zum Zeitpunkt t3 die lastabgebende Kupplung beginnt zu schlupfen. Dabei ist der Zeitpunkt t3 so zu wählen, daß er nur kurz vor dem Zeitpunkt t4 liegt, d.h. dem Zeitpunkt, ab dem das gesamte Antriebsmoment MA von der lastannehmenden Kupplung K2 getragen wird

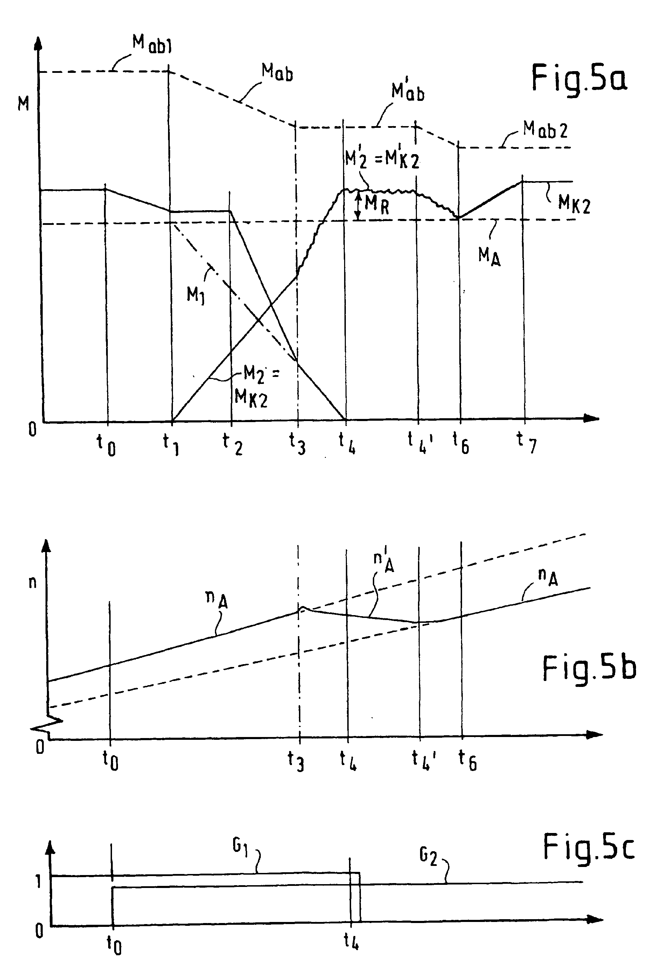

Eine weitere Variante des Steuerverfahrens ähnlich dem in Fig. 1a bis 1c ist in Fig. 5a bis 5c dargestellt, wobei hier die Drehzahlanpassung bereits während der Drehmomentübergabe stattfindet. Bei t3 hat die Drehmomentkapazität MK1 der lastabgebenden Kupplung K1 ihr zu übertragendes Moment M1 erreicht, K1 beginnt zu schlupfen, während die Drehmomentkapazität MK1 weiter bis auf Null bei t4 reduziert wird. Durch das Schlupfen von K1 erhöht sich die Antriebsdrehzahl nA nach t3 kurzfristig und aktiviert die Schlupfregelung der lastannehmenden Kupplung K2. Die Schlupfregelung erfolgt jetzt jedoch so, daß die Drehmomentkapazität MK2 der lastannehmenden Kupplung K2 größer ist als die Kapazität, die notwendig wäre, um zusammen mit der Drehmomentkapazität MK1 der lastabgebenden Kupplung K1 das Antriebsmoment MA zu tragen.

Dies führt zu einer leichten Verspannung im Getriebe. Da das Antriebsmoment MA unberührt ist von diesen Vorgängen, d.h. bei dieser Variante ist kein Eingriff in die Motorsteuerung notwendig, wird das für die Verspannung benötigte Antriebsmoment aus der Rotationsenergie des Antriebes gewonnen, woraus während der Verspannung ein Drehzahlabfall des Antriebes resultiert. Durch die geeignete Ausregelung der Drehmomentkapazität MK2 der lastannehmenden Kupplung K2 wird weiterhin bewirkt, daß ab t3 das zur Verfügung stehende Abtriebsmoment Mab' konstant auf einem Wert verharrt. Dies bedeutet, der Drehzahlabfall des Antriebes wird sowohl genutzt, die Verspannungsenergie bereitzustellen als auch das Abtriebsmoment M'ab für einige Zeit zu stützen.

Sobald bei t4 die lastabgebende Kupplung K1 vollständig geöffnet ist, entfällt auch der Verspannungszustand des Getriebes, und die lastannehmende Kupplung K2 überträgt das Moment M2', welches dem vollen Antriebsmoment MA plus einem kinetischen Anteil MR aus der Rotationsenergie des Antriebes, der abhängig ist vom Drehzahlabfall nA'. Bevorzugt wird dabei die Drehmoment M2' bzw. die Drehmomentkapazität MK2' so eingestellt, daß das Abtriebsmoment Mab' während der Drehzahlanpassungsphase den gleichen Betrag aufweist wie vorher in der Verspannungsphase zwischen t3 und t4.

Zum Zeitpunkt t4', bevor die aktuelle Antriebsdrehzahl nA' die Drehzahl n2 der lastannehmenden Kupplung K2 erreicht hat, also noch in der Drehzahlanpassungsphase, wird die Drehmomentkapazität MK2' der lastannehmenden Kupplung kontinuierlich auf das aktuelle Antriebsmoment MA abgesenkt. Dies hat zur Folge, daß sich der Drehzahlabfall nA' vertangsamt und das Abtriebsmoment Mab' absinkt. Bevorzugt ist dieser Vorgang so geregelt, daß zum Zeitpunkt t6 die Antriebsdrehzahl nA' der Drehzahl n2 und das Abtriebsmoment M'ab dem Abtriebsmoment Mab2 entspricht, wobei Mab2 das aus Antriebsmoment MA und der mit der lastannehmenden Kupplung K2 verbundenen Gangstufe G2 resultierende Abtriebsmoment ist. Sobald bei t6 Drehzahigteichheit von nA und n2 herrscht, wird die Drehmomentkapazität MK2 wieder auf einen Wert oberhalb vom aktuellen Antriebsmoment MA erhöht.

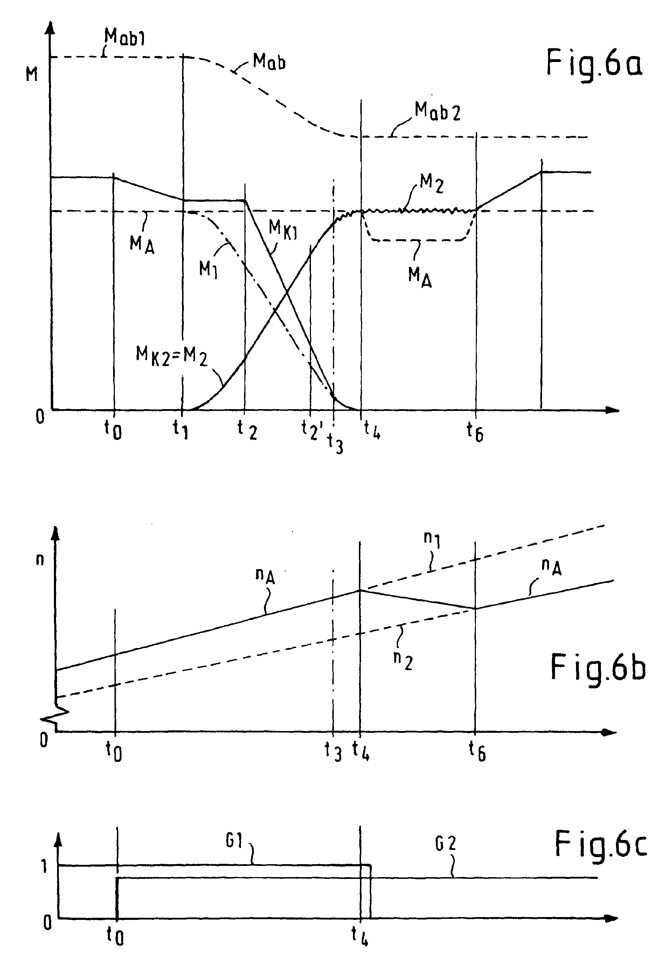

Die prinzipiell gleiche Ausführung des Steuerverfahrens wie in Fig. la bis 1c ist in-Fig. 6a bis 6c dargestellt. Einziger Unterschied besteht darin, daß zu Beginn der Drehmomentübemahme bei t1 die lastannehmende Kupplung K2 die Drehmomentkapazität MK2 nicht linear sondern erst langsam und dann zunehmend schneller erfolgt, bis zu einem Zeitpunkt t2', an dem diese Geschwindigkeit wieder abnimmt. Vorteilhaft ist dadurch der Übergang des resultierenden Abtriebsmomentes Mab bei der Drehmomentübergabe zwischen t1 und t4 sehr weich, so daß für den Fahrer ein höherer Schaltkomfort spürbar wird.

Prinzipiell ist dabei jeder beliebige geeignete Verlauf für M2 zwischen t1 und t4 denkbar, je nachdem welche Reaktion der Fahrer erwartet bzw. erwünscht. So ist es denkbar, für eine sportliche Fahrweise das Drehmoment M2 der lastannehmenden Kupplung sehr rasch ansteigen zu lassen, was sich wiederum unmittelbar auf eine Abfall des Abtriebsmomentes auswirkt, um dem Fahrer einen sehr spontanen Schaltvorgang zu signalisieren.

Allgemein gilt für alle vorher beschriebenen Verfahren, daß sie bezüglich der Ausführung nicht auf die gezeigten Beispiele beschränkt sind. Insbesondere sind die Zeitpunkte der Schaltabläufe beliebig wählbar und einstellbar, je nach erforderlicher Schaltgeschwindigkeit, übertragenem Drehmoment, Komfortwünschen des Fahrers usw. Dies gilt auch für die gezeigten Kurvenverläufe der Drehzahlen und Drehmomente, die z.T. nur schematisch sind. Auch sind alle hier beschriebenen Verfahren auf sinnvolle Weise beliebig miteinander kombinierbar

## Patentansprüche

1. Verfahren zum Schalten eines Lastschaltgetriebes, bei dem eine lastabgebende Kupplung und eine lastannehmende Kupplung eine Antriebswelle und eine Abtriebswelle über verschiedene Gangstufen des Getriebes auf zwei getrennten getrieblichen Pfaden verbinden, wobei während des Schaltvorganges eine Drehmomentübergabe von lastabgebender zu lastannehmender Kupplung erfolgt, und wobei im Ausgangszustand der Drehmomentübergabe die lastabgebende Kupplung ein Antriebsmoment (MA) im Haftzustand überträgt und die lastannehmende Kupplung geöffnet ist, und im Endzustand der Drehmomentübergabe die lastannehmende Kupplung das volle Antriebsmoment (MA) überträgt, wobei während der Drehmomentübergabe die lastannehmende Kupplung Drehmomentkapazität (MK2) im Schlupfbereich aufbaut und die lastabgebende Kupplung Drehmomentkäpazität (MK1) abbaut,
**dadurch gekennzeichnet, daß**
- in der Anfangsphase der Drehmomentübergabe die lastabgebende Kupplung eine höhere Drehmomentkapazität (MK1) aufweist als zur Aufrechterhaltung ihres Haftzustandes notwendig ist, und daß
- bevor die Drehmomentkapazität (MK2) der lastannehmenden Kupplung das volle Antriebsmoment (MA) erreicht, die Drehmomentkapazität (MK1) der lastabgebenden Kupplung so weit reduziert wird, daß lastabgebende Kupplung und lastannehmende Kupplung beide eine gewisse Zeit (t3 - t4) Drehmoment (M1, M2) schlupfend übertragen.

2. Verfahren nach Anspruch 1,
**dadurch gekennzeichnet, daß**
beim Übergang der lastabgebenden Kupplung in den Schlupfbereich die lastannehmende Kupplung mindestens 50% des Antriebsmomentes überträgt.

3. Verfahren nach einem der vorherigen Ansprüche,
**dadurch gekennzeichnet, daß**
die Reduzierung der Drehmomentkapazität der lastabgebenden Kupplung und die Erhöhung der Drehmomentkapazität der lastannehmenden Kupplung zum gleichen Zeitpunkt beginnen.

4. Verfahren nach einem der Ansprüche 1 oder 2,
**dadurch gekennzeichnet, daß**
die Reduzierung der Drehmomentkapazität der lastabgebenden Kupplung vor oder nach dem Beginn der Erhöhung der Drehmomentkapazität der lastannehmenden Kupplung beginnt.

5. Verfahren nach einem der vorherigen Ansprüche,
**dadurch gekennzeichnet, daß**
die Reduzierung der Drehmomentkapazität der lastabgebende Kupplung während der Drehmomentübergabe nicht kontinuierlich erfolgt.

6. Verfahren nach Anspruch 6,
**dadurch gekennzeichnet, daß**
bei der lastabgebenden Kupplung insbesondere gegen Ende der Drehmomentübergabe die Drehmomentkapazität schneller abgebaut wird als zu Beginn der Drehmomentübergabe.

7. Verfahren nach einem der vorherigen Ansprüche,
**dadurch gekennzeichnet, daß**
zum Ende der Drehmomentübergabe mittels der lastabgebenden Kupplung ein Schlupfregler dargestellt wird, der einen selbsttätigen Abschluß der Drehmomentübergabe bewirkt.

8. Verfahren nach einem der vorherigen Ansprüche,
**dadurch gekennzeichnet, daß**
zum Ende der Drehmomentübergabe mittels der lastannehmende Kupplung ein Schlupfregler dargestellt wird, der einen selbsttätigen Abschluß der Drehmomentübergabe bewirkt.

9. Verfahren nach Anspruch 7 oder 8,
**dadurch gekennzeichnet, daß**
mittels des Schlupfreglers die übertragenen Momente der beiden schlupfenden Kupplungen bestimmt wird, und das damit aus dem Summenmoment der Kupplungen das Antriebsmoment adaptiert wird.

10. Verfahren nach einem der vorherigen Ansprüche,
**dadurch gekennzeichnet, daß**
die Anpassung der Antriebsdrehzahl an die Drehzahl der lastannehmenden Kupplung nach dem Übergang der lastabgebenden Kupplung in den Schlupfbereich erfolgt.

11. Verfahren nach einem der vorherigen Ansprüche,
**dadurch gekennzeichnet, daß**
die Anpassung der Antriebsdrehzahl an die Drehzahl der lastannehmenden Kupplung nach vollständiger Öffnung der lastabgebenden Kupplung erfolgt.

12. Verfahren nach einem der Ansprüche 123 oder 13,
**dadurch gekennzeichnet, daß**
die Zeitdauer der Anpassung der Antriebsdrehzahl beliebig einstellbar ist.

13. Verfahren nach einem der vorherigen Ansprüche,
**dadurch gekennzeichnet, daß**
während des Schaltvorganges das Antriebsmoment kurzzeitig erhöht und/oder verringert wird.

14. Verfahren nach einem der vorherigen Ansprüche,
**dadurch gekennzeichnet, daß**
eine mit der lastabgebenden Kupplung verbundene Gangstufe unmittelbar nach Beendigung der Drehmomentübergabe ausgerückt wird.

15. Verwendung eines Verfahrens nach einem der Ansprüche 1 bis 14 in einem Doppelkupplungsgetriebe mit zwei Getriebeeingangswellen und einer Ausgangswelle, wobei jeder Eingangswelle eine Kupplung zugeordnet ist.

16. Verwendung eines Verfahrens nach einem der Ansprüche 1 bis 13 in einem Getriebeautomat.

17. Doppelkupplungsgetriebe mit zwei Getriebeeingangswellen und einer Ausgangswelle, wobei jeder Eingangswelle eine Kupplung zugeordnet ist, bei dem ein Verfahren nach einem der Ansprüche 1 bis 14 verwendet wird.

18. Getriebeautomat, bei dem ein Verfahren nach einem der Ansprüche 1 bis 13 verwendet wird.

## Claims

1. Method for shifting a power shift transmission in which a power-outputting clutch and a power-receiving clutch connect a drive shaft and an output shaft over various gear speeds of the transmission on two separate transmission paths, in which method, during the shifting process, a transfer of torque takes place from the power-outputting clutch to the power-receiving clutch, and in which method, in the initial state of the transfer of torque, the power-outputting clutch transmits a drive torque (MA) in the adhered state and the power-receiving clutch is opened, and, in the final state of the transfer of torque, the power-receiving clutch transmits the entire drive torque (MA), the power-receiving clutch, during the transfer of torque, increasing torque capacity (MK2) in the slip region, and the power-outputting clutch decreasing torque capacity (MK1), **characterized in that**
- the power-outputting clutch has, in the initial phase of the transfer of torque, a higher torque capacity (MK1) than is necessary to maintain its adhered state, and **in that**
- before the torque capacity (MK2) of the power-outputting clutch reaches the full drive torque (MA) the torque capacity (MK) of the power-receiving clutch is reduced to such an extent that the power-outputting clutch and power-receiving clutch both transmit torque (M1, M2) in a slipping fashion for a certain time (t3-t4).

2. Method according to Claim 1, **characterized in that** the power-receiving clutch transmits at least 50% of the drive torque at the transition of the power-outputting clutch into the slip region.

3. Method according to one of the preceding claims, **characterized in that** the reduction in the torque capacity of the power-outputting clutch and the increase in the torque capacity of the power-receiving clutch start at the same time.

4. Method according to one of Claims 1 or 2, **characterized in that** the reduction of the torque capacity of the power-outputting clutch starts before or after the start of the increase in the torque capacity of the power-receiving clutch.

5. Method according to one of the preceding claims, **characterized in that** the reduction in the torque capacity of the power-outputting clutch does not take place continuously during the transfer of torque.

6. Method according to Claim 6, **characterized in that** the torque capacity is decreased more quickly at the power-outputting clutch, in particular towards the end of the transfer of torque, than at the start of the transfer of torque.

7. Method according to one of the preceding claims, **characterized in that** at the end of the transfer of torque by means of the power-outputting clutch, a slip controller is formed which brings about automatic termination of the transfer of torque.

8. Method according to one of the preceding claims, **characterized in that**, at the end of the transfer of torque by means of the power-receiving clutch, a slip controller is formed which brings about automatic termination of the transfer of torque.

9. Method according to Claim 7 or 8, **characterized in that**, by means of the slip controller, the transmitted torques of the two slipping clutches is determined, and the drive torque is thus adapted from the total torque of the clutches.

10. Method according to one of the preceding claims, **characterized in that** the adaptation of the drive rotational speed to the rotational speed of the power-receiving clutch takes place after the transition of the power-outputting clutch into the slip region.

11. Method according to one of the preceding claims, **characterized in that** the adaptation of the drive rotational speed to the rotational speed of the power-receiving clutch takes place after the complete opening of the power-outputting clutch.

12. Method according to one of Claims 123 or 13, **characterized in that** the period of adaptation of the drive rotational speed can be set as desired.

13. Method according to one of the preceding claims, **characterized in that**, during the shifting process, the drive torque is briefly increased and/or reduced.

14. Method according to one of the preceding claims, **characterized in that** a gear speed which is connected to the power-outputting clutch is disengaged directly after termination of the transfer of torque.

15. Use of a method according to one of Claims 1 to 14 in a double clutch transmission with two transmission input shafts and one output shaft, a clutch being assigned to each input shaft.

16. Use of a method according to one of Claims 1 to 13 in an automatic transmission.

17. Double clutch transmission with two transmission input shafts and one output shaft, a clutch being assigned to each input shaft, in which transmission a method according to one of Claims 1 to 14 is used.

18. Automatic transmission, in which transmission a method according to one of Claims 1 to 13 is used.

## Revendications

1. Procédé pour commuter une transmission à changement de rapports sous charge, dans lequel un embrayage fournissant une charge et un embrayage reprenant une charge relient un arbre d'entraînement et un arbre de sortie par le biais de différents rapports de transmission de la transmission sur deux voies fonctionnelles séparées, un transfert de couple de l'embrayage fournissant la charge à l'embrayage reprenant la charge s'effectuant pendant l'opération de commutation, et, dans l'état initial du transfert de couple, l'embrayage fournissant la charge transférant un couple d'entraînement (MA) dans un état d'adhérence et l'embrayage reprenant la charge étant ouvert, et dans l'état final du transfert de couple, l'embrayage reprenant la charge transférant l'ensemble du couple d'entraînement (MA), l'embrayage reprenant la charge augmentant la capacité de couple (MK2) dans la plage de glissement pendant le transfert de couple, et l'embrayage fournissant la charge diminuant la capacité de couple (MK1),
**caractérisé en ce que**
- dans la phase initiale du transfert de couple, l'embrayage fournissant la charge présente une capacité de couple (MK1) supérieure à ce qui est nécessaire pour maintenir son état d'adhérence, et **en ce que**
- avant que la capacité de couple (MK2) de l'embrayage reprenant la charge ait atteint le couple d'entraînement maximum (MA), la capacité de couple (MK1) de l'embrayage fournissant la charge est réduite dans une mesure telle que l'embrayage fournissant la charge et l'embrayage recevant la charge transfèrent tous les deux un couple (M1, M2) par glissement pendant un certain temps (t3 - t4).

2. Procédé selon la revendication 1,
**caractérisé en ce que**
lors du transfert de l'embrayage fournissant la charge dans la plage de glissement, l'embrayage reprenant la charge transfère au moins 50% du couple d'entraînement.

3. Procédé selon l'une quelconque des revendications précédentes,
**caractérisé en ce que**
la réduction de la capacité de couple de l'embrayage fournissant la charge et l'augmentation de la capacité de couple de l'embrayage reprenant la charge commencent au même instant.

4. Procédé selon l'une quelconque des revendications 1 ou 2,
**caractérisé en ce que**
la réduction de la capacité de couple de l'embrayage fournissant la charge commence avant ou après le début de l'augmentation de la capacité de couple de l'embrayage reprenant la charge.

5. Procédé selon l'une quelconque des revendications précédentes,
**caractérisé en ce que**
la réduction de la capacité de couple de l'embrayage fournissant la charge ne s'effectue pas de manière continue pendant le transfert de couple.

6. Procédé selon la revendication 6,
**caractérisé en ce que**
dans le cas de l'embrayage fournissant la charge, notamment vers la fin du transfert de couple, la capacité de couple est réduite plus rapidement qu'au début du transfert de couple.

7. Procédé selon l'une quelconque des revendications précédentes,
**caractérisé en ce que**
vers la fin du transfert de couple au moyen de l'embrayage fournissant la charge, un régulateur de glissement intervient, lequel provoque un arrêt automatique du transfert de couple.

8. Procédé selon l'une quelconque des revendications précédentes,
**caractérisé en ce que**
vers la fin du transfert de couple au moyen de l'embrayage reprenant la charge, un régulateur de glissement intervient, lequel provoque un arrêt automatique du transfert de couple.

9. Procédé selon la revendication 7 ou 8,
**caractérisé en ce que**
au moyen du régulateur de glissement, les couples transférés des deux embrayages glissants sont déterminés, et **en ce que** l'on adapte ainsi le couple d'entraînement à partir du couple combiné des embrayages.

10. Procédé selon l'une quelconque des revendications précédentes,
**caractérisé en ce que**
l'adaptation du régime d'entraînement au régime de l'embrayage reprenant la charge s'effectue après le transfert de l'embrayage fournissant la charge dans la plage de glissement.

11. Procédé selon l'une quelconque des revendications précédentes,
**caractérisé en ce que**
l'adaptation du régime d'entraînement au régime de l'embrayage reprenant la charge s'effectue après l'ouverture complète de l'embrayage fournissant la charge.

12. Procédé selon l'une quelconque des revendications 123 ou 13,
**caractérisé en ce que**
la durée de l'adaptation du régime d'entraînement peut être ajustée de manière quelconque.

13. Procédé selon l'une quelconque des revendications précédentes,
**caractérisé en ce que**
pendant l'opération de commutation, le couple d'entraînement est brièvement augmenté et/ou réduit.

14. Procédé selon l'une quelconque des revendications précédentes,
**caractérisé en ce qu'**un
rapport de transmission associé à l'embrayage fournissant la charge est débrayé immédiatement après la fin du transfert de couple.

15. Utilisation d'un procédé selon l'une quelconque des revendications 1 à 14 dans une transmission à double embrayage avec deux arbres d'entrée de boîte de vitesses et un arbre de sortie, dans lequel chaque arbre d'entrée est associé à un embrayage.

16. Utilisation d'un procédé selon l'une quelconque des revendications 1 à 13 dans un système de transmission automatique.

17. Transmission à double embrayage avec deux arbres d'entrée de boîte de vitesses et un arbre de sortie, chaque arbre d'entrée étant associé à un embrayage, et un procédé selon l'une quelconque des revendications 1 à 14 étant utilisé.

18. Système de transmission automatique, dans lequel on utilise un procédé selon l'une quelconque des revendications 1 à 13.
